# EUROPEAN PATENT APPLICATION

(11) **EP 1 886 937 A1**
(43) Date of publication of application: **13.02.2008**
(21) Application number: 06016461.3
(22) Date of filing: 07.08.2006
(51) Int. Cl.: B65D 83/00

(54) **Piston comprising a pressure compensation surface**

(71) Applicant: 3M Innovative Properties Company, St. Paul, Minnesota 55133-3427 (US)
(72) Inventor: Peuker, Marc, 86938 Schondorf (DE); Stenger, Angela, 82343 Possenhofen (DE); Bertl, Mathias, 82409 Wildsteig (DE); Harre, Manfred, 86899 Landsberg (DE); Hohmann, Arno, 81369 München (DE)
(74) Representative: Vossius & Partner

(57) **Abstract**

The present invention is directed to a piston (110,310,410,510,610,710,910,1010,1110,1210a,1210b) for extruding a substance from a container. The piston comprises a pressure compensation surface to compensate for a difference between the pressure inside of the container and ambient pressure. The present invention is further related to a system comprising such a piston (110,310,410,510,610,710,910,1010,1110,1210a,1210b) and container. The invention provides for storing of preferably flowable substances, such as dental impression materials. In particular, the present invention helps to prevent air from penetration into the container during storage of the substances. The invention also encompasses a kit comprising such a piston.

## Description

### Field of the Invention

The present invention is directed to a piston for a container and a system comprising such a piston and container. It allows storage of preferably flowable substances, such as dental impression materials, in a container and helps to prevent air from penetrating into the container. In particular, the present invention allows volume changes of the substances during storage in the container, while preventing air from entering the container due to the change in volume. The invention also encompasses a kit comprising such system.

### Background of the Invention

There are a variety of containers or packages for storing substances until they are used. Especially in the field of dentistry, flowable substances are often stored in containers from which they can be dispensed by syringes (for manual use) or cartridges (for use with a dispensing gun or device). A container of that nature usually includes a compartment for storing the substance, and a discharge nozzle for directing the substance to a desired place. A piston is accommodated in the compartment, and when it is pushed forward it extrudes the substance from the container through the nozzle. During storage the container is sealed to seal in the substance from the environment. A closure, such as a cap, seals the discharge nozzle at one end of the compartment, and the piston seals the other end of the compartment. The container may also comprise two or more compartments for storing two or more substances, such as two or more components of a multi-component material, and pistons accommodated in the respective compartments. The container may be used, for example, with a dispensing gun or device having a plunger or plungers for advancing the piston(s) within the container.

US 5,400,926 discloses a dispensing cartridge comprising a storage cylinder and a feeding piston with a sealing ring inserted in its wall. The end of the piston facing the cartridge contents is additionally provided with a sealing lip. The piston further comprises venting grooves and a venting bore providing for venting of the bottom surface of the piston, which is the surface facing the cartridge contents. The venting bore is capable of being closed by a closure.

A common problem of prior art containers and packages, however, is air leaking into the container during storage. This can cause the contents of the container to cure, harden or otherwise change properties so that they may not perform properly in use. Accordingly, it would be beneficial to provide a container in which the substance stored within the container is protected from getting in touch with air.

### Summary of the Invention

Generally, it is desirable that a container has no air in the compartment with the substance because air may interact chemically and/or physically with the substance and cause, for example, hardening and other changes of properties. Furthermore, air, due to its compressibility, may cause dispensing inaccuracies and after-flow, for example. Those effects result from the capability of compressible media to act in a manner similar to a compressible spring - storing energy from force that is applied to it, and then releasing the energy by expansion when the force is released. If, for example, the piston is advanced to extrude the substance from the container and therefore pressure is built up in the compartment, air bubbles would be compressed by that pressure. However, when the piston is released because the user wishes to stop extruding the substance, such air bubbles may expand and cause more of the substance to flow out of the container. This also means that the substance flow may be delayed temporarily when the air is compressed and may be advanced again when the air expands, so the flow rate is inconsistent. Especially with regard to multi-component substances (substances formed of two or more components), whose components usually have to be dispensed simultaneously at a certain ratio to form a properly composed mixture, this is not desirable. For dispensing multi-component substances it is important to minimize the amount of air in the compartments because the compressibility of air causes the individual volumes of the substances being dispensed inaccurately. Thus, the ratio between the two substances varies unpredictably, which is undesirable, especially if there are different amounts of air in different compartments of the container. When the individual substances are supposed to be mixed inaccuracies of the ratio may have impact on the properties of the mixed material.

However, even if the container is filled without air, it is difficult to prevent air from penetrating into the container over time. A leak often occurs at the seal between the container and the piston, and it may occur when the volume of the substance contracts, drawing air into the compartment. Such volume contraction may, for example, result from lowering the substance temperature, for example in consequence of a decrease of the ambient temperature. Because there is friction between the piston and the compartment, the piston does not immediately move to compensate for the volume reduction, but instead initially stays in its position so that a vacuum is created in the container resulting from the volume contraction of the substance. The vacuum will cause air to be drawn into the container over time through the imperfect seal between the piston and the container. For example, during shipment such pre-filled containers are exposed to different temperatures causing the substance filled therein to change its volume. The volume of the substance therefore may expand or contract according to the temperature change. The piston may be immediately displaced to make room for the expanded substance in case the container is exposed to relatively high temperatures because the substance may be generally incompressible. However, as soon as the temperature decreases the volume of the substance may reduce and therefore a vacuum is created as described above. For this reason a vacuum may exist in the container at any temperature below the maximum temperature the container once was exposed to, meaning that a vacuum might even exist almost anytime after the container was exposed to high temperatures.

A first aspect of the invention is related to a piston for extruding a substance from a container that overcomes at least some of the disadvantages of the prior art. The piston comprises a pressure compensation surface to compensate for a difference between the pressure inside of the container and ambient pressure. Preferably, the pressure compensation surface is adapted to be deformed in response to a difference between the pressure inside of the container and ambient pressure. In more particular the pressure compensation surface is adapted to be deformed in response to a pressure difference that is caused by a change of the pressure inside relative to the outside of the container, for example, because of a pressure reduction due to contraction of the substance stored in the container. In other words, it is preferred that with respect to a generally constant ambient pressure, a pressure change (a decrease or even in some embodiments an increase) inside of the container triggers the deformation of the pressure compensation surface of the piston. It is preferred that the ambient pressure is the pressure outside of the container or, in other words, of the air surrounding the container. Preferably, initially the pressure inside of the container generally corresponds to the ambient pressure at the location the container is filled with the substance. The ambient pressure, meaning the pressure of the air outside the container, generally corresponds to the atmospheric pressure, which is for example the standard atmospheric pressure at absolute altitude of 1,013.25 hPa (1 hPa = 100 Pascal). The actual atmospheric pressure may vary from this standard depending on where such a container is located and from the usual variations of the pressure at that location, for example in a range of ± 10% because of weather variations. Preferably, the pressure compensation surface is adapted to be deformed in response to the pressure difference, while the inside of the container is sealed against fluid communication with the environment. Or in other words, while the container is preferably entirely closed, meaning there is no open passageway between the inside and the outside of the container. In the context of the latter sentence the term "passageway" excludes natural permeability of materials the container and the piston are made of. Preferably, the deformation of the pressure compensation surface results in a change of the outer size of the piston, meaning a change of the dimensions between opposing outside surfaces of the piston.

In a further preferred embodiment of the invention the piston is adapted to fit in a compartment of the container. The container may be in the form of a cartridge having a compartment with an open end and an outlet at the other end. The compartment of such an exemplary container has a generally cylindrical inner shape and is adapted to receive the piston of the invention. However, other inner shapes like those having an ovular, generally rectangular, or generally D-shaped cross-section are encompassed. Preferably the piston is adapted to seal the compartment of the container to enclose the substance contained in the container from the environment.

In another preferred embodiment a piston is provided for extruding a substance from a container. The piston is preferably adapted to be displaced in the compartment for extruding the substance from the container outlet. Preferably, the piston comprises a pressure compensation surface which is adapted to be deformed in response to a volume change of the substance. Preferably, the pressure compensation surface deforms to compensate for a volume change of the substance stored in the container. Therefore, the pressure compensation surface is preferably also a volume compensation surface. More particularly, the pressure compensation surface of the piston deforms to compensate for a volume reduction of the substance stored in the container. As mentioned, a volume change of the substance may occur in response to a temperature change, for example when the container was filled at room temperature of 20 - 23 °C and the substance is exposed to lower temperatures during transport. In one preferred embodiment of the piston, the piston is expandable in at least one dimension through deformation of the pressure compensation surface. This means that preferably the pressure compensation surface is deformable in a manner to correspond to a volume change of the substance. Thus, initial direct contact between the pressure compensation surface and the substance is generally maintained during a volume change of the substance after its initial filling. The pressure compensation surface thereby preferably deforms to compensate at least partially for the pressure difference and thus prevents air from being drawn into the container. Thus, air is prevented from coming between the piston and the substance. The at least partially compensation for the pressure difference encompasses that a part of the pressure difference may be maintained because that part of the pressure may be required to maintain deformation the pressure compensation surface. Preferably, within a range of a pressure difference of between 0 and 1,200 hPa such remaining pressure difference is between 10% and 1% of that pressure difference and more preferably between 1% and 5%. For example, with respect to a volumetric contraction of the substance, for example in response to a reduction of the temperature of the substance, a preferred piston through expansion is adapted to compensate, and thus to prevent air from being drawn into the compartment around the seal in the manner further described herein. Preferably, the piston is expandable in the direction toward the substance. The piston may also, or instead, be contractable in the direction away from the substance, so that for example it can accommodate in increase in the volume of the substance.

Although it seems possible that the piston would simply move within the compartment to accommodate the pressure difference, other factors such as the amount of the substance on the inside walls of the compartment, or the frictional forces between the inside wall and the piston seal, may prevent it. If the low pressure inside the compartment reaches the level at which the piston can be moved, the movement is unlikely to relieve the vacuum effect entirely, so that a certain vacuum level remains, and with it the possibility of air entering the compartment.

In another preferred embodiment of the invention the pressure compensation surface is an outer surface of the piston, and more preferably a surface of a membrane. The piston preferably further comprises a piston body carrying the membrane, wherein the membrane is preferably arranged at a front end of the piston body, which is the end facing the substance. The membrane according to a preferred embodiment can be deformed relative to the piston body. The piston body preferably supports the membrane so that the deformability of the membrane is limited in the direction away from the substance. In this case, the membrane from a first position in which it is supported by the piston body can only deform in a direction away from the piston body. Preferably the piston body supports the membrane when the piston is used to extrude the substance from the container. This is because the membrane is adapted to be deformed by rather low pressure, while the pressure necessary to extrude the substance from the container may be much higher. Preferably the membrane can be deformed by a pressure of approximately less than 1,000 hPa, and more preferably by a pressure of approximately less than 100 hPa. In contrast, the piston is adapted to provide the pressure for extruding the substance, for example up to 10,000, 20,000 or 40,000 hPa. Therefore, by supporting the membrane, a deformation of the membrane through low pressures is enabled while on the other hand high pressures necessary for extruding the substance from the container can be applied. Preferably, the membrane has a thickness of between 30 µm to 250 µm, and preferably a thickness of 100 µm.

In a further preferred embodiment the piston body comprises a through-hole overlaid by the membrane at the front end. In other words, the membrane preferably covers the through-hole. The cross-section of the through hole may be of a circular, rectangular or any other suitable shape. It is preferred that the through-hole provides fluid communication, in particular with respect to air, between the side of the membrane facing the piston body and the exterior of the piston. The membrane is generally impermeable to air, meaning that air cannot pass through the membrane except at flow rates that may be provided by the natural permeation properties of the material the membrane is made of. Generally the membrane provides such impermeability to air at a pressure between 0 to at least 1,200 hPa. The back side of the membrane adjacent to the substance is preferably in fluid communication with the exterior of the piston. Thus, fluid communication between the exterior of the piston and a hollow space which may be formed between the membrane and the piston body is also provided. Preferably, the membrane when deformed away from the piston body forms one boundary of the hollow space with the piston body. The through-hole thus provides a ventilation function enabling the membrane to deform relative to the piston body with the air passing through the through-hole. The ventilation function, however, does not provide for fluid communication between the substance and the environment because the membrane is substantially impermeable to air.

The through-hole preferably extends between a rear end and the front end of the piston body, and preferably has its narrowest dimension adjacent the front end of the piston body. This means that the through-hole may be tapered towards the front end of the piston body so that its cross-sectional area is smaller at or near to the front end than at the rear end of the piston. It is desirable that the through-hole has a small opening adjacent the front end of the piston, because in the area of the opening the membrane is unsupported and therefore sensitive to high pressure as may occur during extruding of the substance from the container. The free area of the membrane is tensile-loaded along dimensions it spreads the hole when exposed to the pressures. Upon exceeding tensile-load limits, for example in response to high pressure, the membrane may be overstretched or may even rupture. Because a smaller free area results in a lower tensile-load, it is possible by minimizing of the free area to prevent overstretching or rupturing of the membrane during the dispensation of the substance. In a preferred embodiment, the area of the through-hole at the front end of the piston body is between 0.1 mm² and 0.01 mm².

The piston body may be elastic so that the through hole is closed upon compressing the piston body. That is, when the piston is pushed by a plunger to extrude substance from the container, and therefore the piston is compressed between the substance and the plunger, the through hole may be forced shut at least temporarily. Under these circumstances, the membrane is completely supported by the piston body. However, if pressure applied to the piston body is released, the through-hole can open and may provide fluid communication between the side of the membrane facing the piston body and the exterior of the piston again.

In another embodiment the piston body is made of a porous material like open-cell foamed plastic, sintered plastic particles or the like. In such an embodiment a through-hole would not necessarily be required.

The membrane may comprise a reinforcement at the area that is intended to cover the hole, which is useful because in that area the membrane is not supported by the piston body. For example, the membrane may comprise a thickened portion relative to the remainder of the membrane, and accordingly it permits a user to apply higher pressure during dispensation of the substance.

In another embodiment, the through-hole is formed by two intersecting passageways. Preferably, the through-hole is formed by a first passageway and a second passageway extending generally transverse from the first passageway to a side wall of the piston body. For example, a first passageway may extend into the piston body from its rear end towards the front end without breaking through the front face of the piston body, and a second passageway extends between the first passageway and a wall other than the opposite wall of the rear end of the piston body.

The piston body may further comprise a peripheral groove. In that case, the through-hole may be formed by a first passageway and a second passageway extending laterally, for example, from the first passageway, with the second passageway intersecting a surface of the groove. This means that the second passageway opens at at least a wall of the groove so that fluid communication exists between the groove and the first passageway.

In a further embodiment the membrane covers at least a part of an end face of the piston body, and more preferably the membrane covers the end face and at least a part of a side wall of the piston body. In this latter embodiment the piston may further comprise an o-ring for retaining the membrane in the groove.

In an optional embodiment a piston body with a peripheral groove is provided, wherein the bottom of the peripheral groove comprises a secondary groove, indentation, or flute extending transverse to the peripheral groove. Preferably the bottom of the peripheral groove comprises at least one secondary groove continuing in a direction other than the peripheral direction of the groove, and even more preferably the bottom of the peripheral groove comprises a plurality of such secondary grooves. Alternatively or additionally, the bottom of the peripheral groove has a rough or structured surface. A secondary groove or rough or structured surface as mentioned provides air passageways even when the membrane seals with areas of the groove bottom in case it is held in the groove, for example by an o-ring, to retain the membrane. Such an embodiment would work without a through-hole if a loose fit between the membrane and the piston body is provided. This is because the loose fit between the membrane and the piston body provides a gap between both parts, also forming a passage for air and the air passageways allow air to pass between the groove bottom and the membrane at the area the seal retains the membrane. However, the piston would still be adapted to seal a container because the o-ring seals with the wall of the container and in the groove with the outer wall of the membrane.

An alternative embodiment comprises grooves at surfaces of the piston body being in contact with the membrane to allow air to pass between the piston body and the membrane, for example, as an alternative to the loose fit between both parts mentioned above. In a preferred embodiment the face of the piston comprises a groove or a plurality of grooves extending radially between the center and the circumference of the piston face. Further, side walls may comprise a groove or a plurality of grooves extending between the rear end and the front end of the piston body. Instead of grooves, a rough or structured surface may be used to allow air to pass between the piston body and the membrane.

In a preferred embodiment of the invention the membrane is elastic. The membrane can be made of an elastic material like a thermoplastic elastomer, thermoset elastomer like rubbers, or other suitable materials. The membrane may also be a foil. The foil may be deep-drawn to provide better deformability relative to the elasticity provided by the material it is made of. The deformability is in this case substantially provided because the deep-drawn structure may be inverted between its initial shape and a shape generally corresponding to the negative of the initial shape. Such a foil may be used with an embodiment of the invention in which the piston body may be recessed at its front end. The foil may be arranged on the front face of the piston initially. Preferably, in case a deep-drawn foil is used, the foil is initially arranged with the deep-drawn structure projecting into the recess of the piston, which is the retracted state. Thus, the membrane is between the substance and a concave side of the piston body. A deformation of the pressure compensation surface is then provided in that the foil inverts. In its extended state, which is the state in which the shape of the foil is generally the reverse of the retracted shape, the foil forms a convex face facing the substance. Preferably, the foil comprises a metal layer so as to serve as a long term barrier to gases, for example during long-term storage of a substance in a container. The foil may be sealed to the piston by one of heat-sealing, welding, ultrasonic sealing, gluing, clamping, or other known methods.

In an alternative embodiment of the invention a piston is provided, wherein the piston body comprises a closed-end-hole with the end of the closed-end-hole being represented at least partially by the membrane. Preferably the membrane is integrally formed with the piston body.

In a further embodiment of the invention the pressure compensation surface of the piston is at least in part formed by an elastic member, wherein the elastic member preferably extends between the end faces of the piston. Such an elastic member may be made of generally the same materials as specified for the membrane. The piston of this embodiment preferably comprises a peripheral groove and may further comprise a seal adapted for sealing with a wall of the compartment. The seal is preferably integrally formed with the elastic member and the piston body. Preferably, the elastic member is substantially cylindrical and provided within and preferably concentric to a tube-like piston body. Such a piston may, for example, be manufactured by two-component injection molding with the piston body being molded first, and then over-molded in a single subsequent step by the material forming the elastic member and the seal.

In another embodiment of the invention the piston comprises a sealing member, and in more particular the membrane comprises such a sealing member. Preferably, the sealing member is an annular lip seal adapted for sealing with a compartment wall of the container. The seal is preferably arranged adjacent or at the front end of the piston. Preferably, the base of the lip is arranged on the front face (the face facing the substance) of the membrane. The seal lip from its base preferably protrudes from that face so as to form a conical, funnel-shaped structure opening in a direction of the substance, and with its end forming an edge adapted to seal with a compartment wall of the container. With such a configuration, increasing pressure in the compartment actually increases the seal effect because the seal lip is increasingly pressed toward the compartment wall. Alternatively the sealing member may be a sealing bulge adapted for sealing with a wall of the compartment. Preferably, the sealing member is one of an annular lip-seal, a sealing bulge and a combination of the foregoing, although other seal configurations may be used.

Preferably, the sealing member is molded in one step with the deformable pressure compensation surface, for example the sealing member may comprise an o-ring being integrally formed with the membrane.

A piston having no discrete sealing member, but adapted to seal with a compartment wall of the container because of its size and shape, is also encompassed by the invention.

Another alternative of the invention provides a piston having a piston body comprising a movable member. The movable member is preferably displaceable relative to the piston body while it tightly seals with the piston body. Preferably, the movable member is adapted to be displaced in response to a difference between the pressure inside of the container and the pressure outside the container. The movable member may be a pin which is sealingly and displaceably accommodated in a tube like piston body. The pin may be displaceable relative to the piston body along the longitudinal axis of the tube. The movable member may be moved by a difference between the pressure inside and outside of the container while the piston body remains in its position. Thereby, because displacement of the movable member varies the volume inside of the container, the pressure difference may be at least partially compensated.

In a second aspect of the invention a system is provided, wherein the system comprises a piston according to the invention and a container for storing a substance. Preferably the piston is accommodated in the container. The container may comprise a compartment for storing the substance and an outlet connected with the compartment. The compartment may be formed by a generally cylindrical hole extending into the container, however other structures having ovular, generally rectangular, generally D-shapes or other suitable shapes cross-sections are encompassed. A preferred embodiment of the invention encompasses also a system further comprising the substance contained within the compartment. Preferably, the piston of the system is sealingly accommodated in the compartment with the pressure compensation surface facing the substance. The piston thus preferably prevents essentially all air from penetrating into the compartment. The pressure compensation surface is preferably deformed in response to a difference between the pressure inside of the container and ambient pressure, wherein the pressure difference required to deform the pressure compensation surface may be less than the pressure difference required to displace the piston in the compartment.

In another embodiment of the invention the system has a container comprising at least two compartments containing a flowable material component. Preferably, the material components are components of a dental impression material, in particular one of a polyether-based dental impression material and silicone-based dental impression material. Such an embodiment may comprise at least two pistons being connected with one another, in particular the at least two piston bodies may be integrally formed (formed as one piece) with one another.

A third aspect of the invention is related to a kit comprising a system according to the invention and at least a mixing tip. Preferably the mixing tip comprises a static mixer, however, dynamic mixers are also encompassed. Preferably the kit further comprises a dispensing gun for use with the system according to the invention.

It is also encompassed that the piston, the system or the kit according to the invention may comprise any of the features according to the first aspect of the invention either individually or in combination with one another.

The invention provides the advantage of greatly reducing or even preventing air penetration into a container, which is filled with a substance and closed by a piston. The invention also provides the advantage that previous efforts to provide thermal insulation for containers to lower the impact of temperature changes can be reduced.

A further advantage is provided especially with respect to multi-component (two or more component) containers because a minimized amount of air in the individual compartments helps achieving accurate mixing ratios and therefore good performance of the mixture. Therefore the invention is also advantageous with regard to providing consistent material quality.

### Detailed Description of the Invention

- Fig. 1a, 1b: are a schematic cross-sectional views showing a piston and a system according to an embodiment of the invention with the pressure compensation surface of the piston in two different states of deformation;
- Fig. 2a, 2b: are schematic views of a piston having a membrane according to an embodiment of the invention;
- Fig. 3: is a cross-sectional perspective view of a piston having a through-hole with a tapered portion according to an embodiment of the invention;
- Fig. 4: is a cross-sectional perspective view of a piston having a through-hole with a passageway extending to the peripheral groove according to an embodiment of the invention;
- Fig. 5: is a cross-sectional perspective view of a piston comprising a lip seal according to an embodiment of the invention;
- Fig. 6: is a cross-sectional perspective view of a piston comprising a membrane with a reinforced portion according to an embodiment of the invention;
- Fig. 7: is a cross-sectional perspective view of a piston with a through-hole being arranged off-center with respect to the rotation axis of the piston according to an embodiment of the invention;
- Fig. 8: is a view of a piston having a peripheral groove and, transverse to it, second grooves according to an embodiment of the invention;
- Fig. 9a, 9b: are cross-sectional perspective views of a piston having a foil according to an embodiment of the invention with the foil being in two different states of deformation;
- Fig. 10a, 10b: are schematic views of a piston having a deformable portion according to an embodiment of the invention;
- Fig. 11a, 11b: are schematic views of a piston with an elastic member according to an embodiment of the invention;
- Fig. 12: is a schematic view of a dual-compartment container with pistons according to an embodiment of the invention; and
- Fig. 13: is a view of a dispensing gun as it may be used with the system according to an embodiment of the invention;

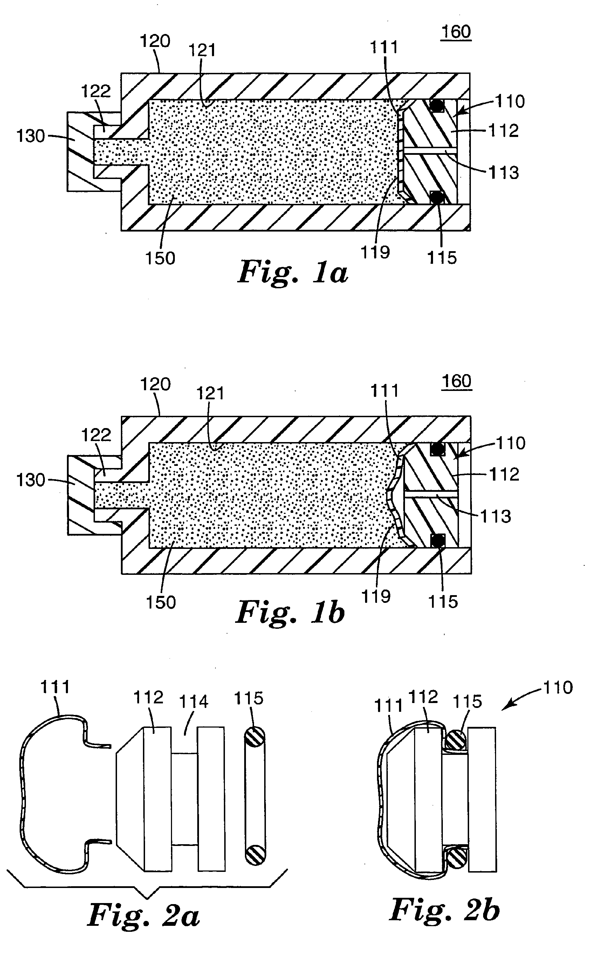

Figs. 1a and 1b show a piston 110 for extruding a substance 150 from a container 120. Piston 110 fits in the compartment 121 of the container 120 and seals the rear end of the compartment 121. The piston can slide or be displaced within the compartment. A cap 130 is placed on an outlet nozzle 122 so that the substance 150 is encapsulated in the container 120. Fig. 1a shows the piston 110 and the container 120 in an initial state where the substance 150 has an initial volume. This initial state would generally correspond to the situation shortly after the container 120 has been filled by the manufacturer. Such a container is filled, for example, from the end of the outlet nozzle with the piston being initially placed adjacent the outlet nozzle, and as a result of filling the piston is moved backward to the position shown in Figs. 1a, 1b.

The piston 110 comprises a membrane 111 with a pressure compensation surface 119. The membrane 111 is arranged at the front end of the piston 110. As can be seen from Fig. 1b the membrane 111 and therefore the pressure compensation surface 119 is deformed in response to a volume contraction of the substance 150, meaning that because of the volume contraction of the substance a pressure difference between the inside of the container (compartment 121) and the environment 160 is built up. Such volume contraction (or more generally a volume change) may be caused, for example, by a temperature change, like a temperature decrease, or by aging-related effects. In any case a volume contraction of the substance 150 creates a vacuum within the container 120 because the substance 150 is encapsulated therein so that a pressure difference exists between the interior of the container 120 and the environment 160. Because the membrane 111 is in fluid communication with the environment via the through-hole 113 in the piston body 112, it is deformed by the pressure difference and compensates for it at least partially. Preferably such a membrane is rather thin, and for example, has a thickness of between 30 µm to 250 µm, and preferably a thickness of 100 µm. Furthermore it is made of an elastic material. Therefore the membrane' is deformable at rather low pressures as described above. In contrast, a higher force must be applied to cause movement of the piston because piston 110 has to tightly seal the compartment 121 of the container 120. In other words, a relatively high force or pressure is required to displace the piston due to the frictional forces between the piston and the walls of the compartment. For this reason, when the volume of the substance 150 contracts the piston 110 generally remains in its position, while the membrane 111 deforms due to a pressure difference that is built up between the inside of the container and ambient pressure.

In case the volume of the substance 150 expands relative to its initial volume the piston 110 is generally immediately displaced towards the rear end of the compartment 121 because the piston limits the ability of the membrane 111 to deform in the direction away from the substance. In this case the displacement is caused mainly by forces that are provided through the volume expansion of the substance 150 itself. In general in the system as shown in Fig. 1a, 1b those forces may be higher than forces resulting from the vacuum in response of the volume contraction of the substance 150. Thus, a compensation of a volume expansion of the substance relative to its initial volume is generally accomplished by displacement of the piston 110. In practice a displacement of the piston 110 in response of volume expansion of the substance 150 will usually not occur very often. This is because once the piston 110 has been displaced to provide space for an expanded volume, further volume changes below that expanded volume will cause only the membrane 111 to compensate. Especially when the substance first expands, thus pushing the piston back, subsequent cooling would under most circumstances draw air into the container. However, in this instance the membrane will compensate and prevent air penetrating the container.

Figs. 2a and 2b show the piston 110 with certain preferred components. Fig. 2a shows the individual components of the piston 110, the membrane 111, the piston body 112 and an o-ring 115. The piston 110 comprises a peripheral groove 114. Fig. 2b shows the piston 110 with the components 111, 112, 115 of Fig. 2a being assembled. In the embodiment shown the membrane 111 covers the front face and side walls of the piston 110. The membrane 111 is retained by the o-ring 115 in the groove 114. Although not shown, it is possible to use a membrane covering a smaller or greater part of the side walls as well as covering all side walls (and/or even a part of the rear face) of the piston 110. The membrane 111 may be pre-formed so as to closely fit the piston body 112. Alternatively, the membrane 111 may be pre-formed to at least partially loosely fit with the piston body 112. In latter case the piston body 112 in areas it fits loosely forms a gap with the membrane 111 when assembled. The gap may be used to provide fluid communication between the membrane and the environment, and therefore to allow the membrane to deform in response to a pressure difference between the inside of a container and the environment. Optionally the membrane is not pre-formed but is, for example, a piece of film which is wrapped around the piston body 112 and fixed by the o-ring 115.

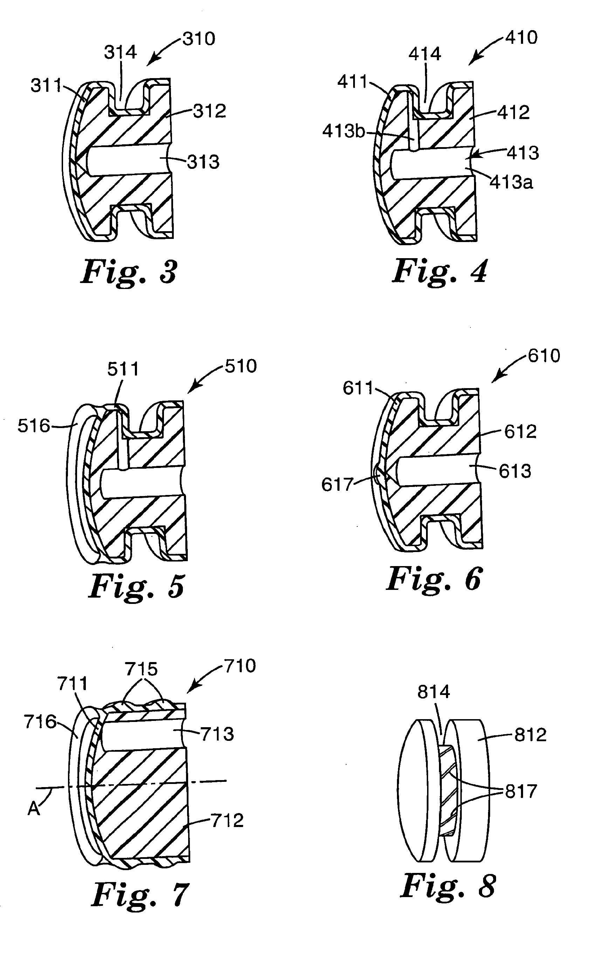

Fig. 3 shows a piston 310 having a piston body 312 and a membrane 311. In this embodiment, the piston body 312 comprises a through-hole 313 that is tapered in one area. Alternatively the through-hole 313 may be tapered over its entire length. The though-hole 313 extends between the rear face of the piston 310 and the front face, and has its smallest cross-sectional area adjacent the front face. As shown the through-hole 313 has a generally circular cross-sectional shape. However, other shapes like oval, rectangular, or cross-shaped may be suitable alternatives. As can be seen, the small cross-sectional area adjacent the front face provides for a small unsupported area of the membrane 311. The minimal unsupported area enables such a piston to extrude a substance from a container at rather high pressures without destroying the membrane or pushing the substance through the through-hole. Again the piston 310 has a peripheral groove 314 for receiving a seal, such as an o-ring.

Fig. 4 shows an alternative of the embodiment of Fig. 3. The piston 410 comprises a membrane 411 and a piston body 412. The through-hole 413 has sections 413a and 413b. The section 413a is a first passageway extending into the piston body without breaking through the front face of the piston body, and section 413b is a second passageway extending from the first passageway to a side wall of the piston body 412. In this embodiment the membrane 411 is completely supported by the front face of the piston body 412. An unsupported area of the membrane 411 is however provided at a side wall of the piston 410. In this area the pressure during use of the piston to extrude the substance may be lower compared to the overall pressure in the container. This is because the piston itself may at its front-most end seal with the compartment of the container (not shown) so that in the area behind that seal the pressure is lower. In this case a seal arranged in peripheral groove 414 would be an additional seal, e.g. to increase the long-term effectiveness of the seal. Optionally, the membrane may be thicker or otherwise reinforced in the area of its side walls so as to provide better mechanical stability, for example with respect to an unsupported area. It is possible to make the membrane thicker at its side portions because in that area the membrane does not have to provide deformability to the extent required for the portion facing the substance. Thereby the part of the membrane being unsupported is separated from the part of the membrane providing deformation in response to a difference between the pressure inside of the container and ambient pressure. As an advantage the unsupported area may be optimized, for example by making it as thick as required, to withstand high pressures when substance it extruded from the container. And on the other hand, the part of the membrane providing deformation according to the invention may be optimized towards easy deformability, for example by making it as thin as necessary.

Fig. 5 shows a design that is a variation of the one shown in Fig. 4. In this embodiment, the piston 510 comprises a membrane 511 having an annular lip-seal 516 at its front face. The lip seal projects from the front face of the piston, and it forms a generally partially funnel-shaped structure opening towards the substance. Such a seal provides for good sealing during use of the piston to extrude substance from a container (not shown). Because of its conical or funneled configuration the contact force, and thus the quality of the seal, between the lip seal 516 and the compartment (not shown) increases upon increasing pressure in the compartment. Therefore also the unsupported area of the membrane 511 is generally not under high pressure, and therefore may not, for example, need to be reinforced.

Fig. 6 shows an embodiment of a piston 610 having a membrane 611 with a reinforced portion 617. The reinforced portion 617 may be a thickened portion that overlies, at least partially, a hole of the type described above. Alternatively the thickness of the membrane may continuously increase from an area around the unsupported areas towards the unsupported area. It is also encompassed that the membrane at an unsupported area may be partially made of a material providing increased mechanical stability, for example, out of a more rigid material relative to the material used for the membrane.

Fig. 7 illustrates a piston 710 comprising a membrane 711 having a seal 715 which is integrally formed with the membrane 711. As shown, the membrane may have two or more seals 715. Such seals provide a tight seal similar to an o-ring seal, but save the additional assembly steps required to mount the o-ring. The membrane 711 also has a lip seal 716 of the same general type described in regard to Figure 5. The lip seal 716 provides good sealing when the piston is used to extrude substance from a container, while seal 715 provides improved long-term sealing characteristics. The piston body 712 comprises a through-hole 713 which is off-center with respect to the rotation axis A of the piston. The through-hole 713 has a uniform diameter over its length, and the aperture is formed by the through-hole breaking at least partially through the front face of the piston body. In this case, because the front face of the piston body has a domed surface, the size of the aperture can simply be determined (besides the shape of the front face of the piston body) by the depth the core penetrates the piston body. However, the through-hole may also have a tapered or otherwise reduced portion adjacent the front face of the piston body.

Fig. 8 shows a piston body 812 comprising a peripheral groove 814. The bottom of the peripheral groove 814 comprises secondary grooves 817 extending, in this embodiment, transverse to the peripheral groove 814. If used with a membrane as shown in Figs. 3 to 7 and an o-ring to seal the piston with a compartment of a container (not shown), the membrane does not seal with the bottom of the peripheral groove 814. For this reason, fluid communication of the membrane with the environment can be provided by a loose fit of the membrane with the piston body 812 and in the area of the peripheral groove 814 by secondary grooves 817. Alternatively or additionally, the bottom of the peripheral groove 814 may have a rough or structured surface providing such fluid communication.

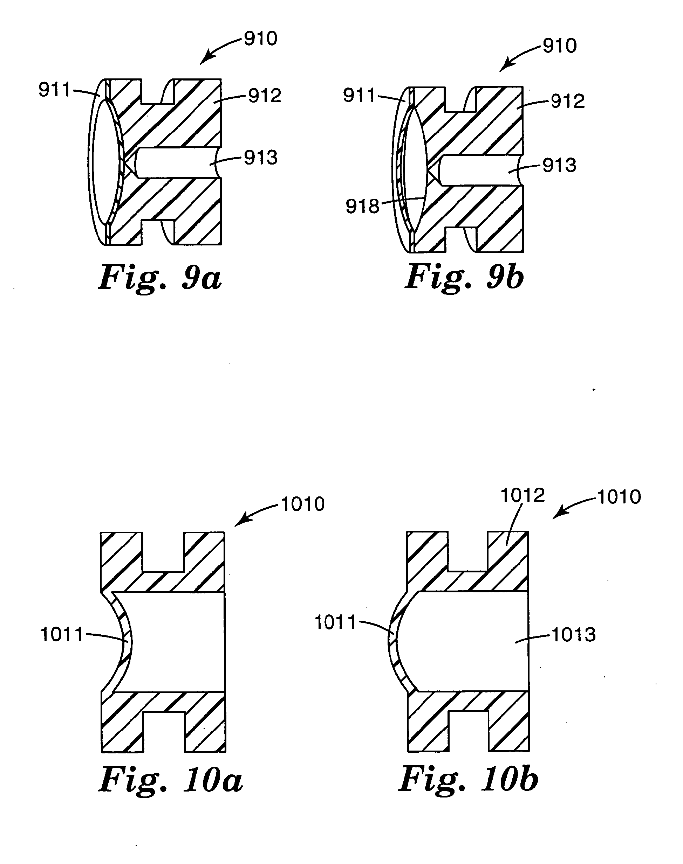

Figs. 9a and 9b show a piston 910 comprising a deformable foil 911 arranged at the front face of the piston body 912. The foil 911 may comprise a metal layer to prevent substances, such as gases, from permeating through it. This is advantageous, for example, if a substance has to be tightly encapsulated from air over a long storage period (for example substances that comprise components that chemically react with components of air, substances having components that tend to migrate into air or even substances that absorb components of the air). Fig. 9a shows the piston 910 in an initial or contracted state, i.e. where the foil 911 is in contact with the piston body 912. Fig. 9b shows the foil when it is deformed, i.e. when it is in an extended state. The piston body 912 comprises a recessed front face 918. In Figs. 9a and 9b the recess has a shape similar to a portion of a sphere, however, other concave structures are encompassed. The foil 911 is pre-shaped, for example deep-drawn, so that its shape generally corresponds to the shape of the recess when not deformed, meaning when it is in its initial state. The foil may be deep-drawn prior to combining it with the piston body, or by pushing the foil into the recess of the piston body after combination. For example, the foil could be heat-sealed or welded to the piston body first, and by a stamp be drawn into the piston recess. An annular connection is provided between the foil 911 and the front face 918 of the piston body 912 so as to tightly fix the foil 911 to the piston body 912. This embodiment allows the foil 911 to deform continuously between its contracted and its extended state (because the through-hole 913 provides the required fluid communication between the foil 911 and the environment) to permit pressure compensation between the inside of the container and ambient pressure. It is also possible that the piston body 912 has a generally flat front face. In this case, the foil is preferably pre-shaped, such as deep-drawn, and combined with the piston body in its extended state, meaning that in this case the foil initially forms a hollow space with the piston body and is pushed into its contracted state after assembly. It is also encompassed that instead of a foil an elastic film is used with either shape of the front face of the piston body. The foil preferably comprises an outer layer of polypropylene or polyethylene and an inner layer of aluminum. The overall foil thickness is preferably between 45 µ and 120 µm, wherein the aluminum layer preferably is thicker than about 40µm.

Fig. 10 shows an embodiment of a piston 1010 with a membrane 1011 and a piston body 1012 being integrally formed (formed as one piece). A closed-end-hole 1013 extends into the piston 1010 so that the membrane 1011 is formed as a thin wall between the front face of the piston and the end of the closed-end-hole. The membrane 1011 may be pre-shaped, for example may have a shape that is a portion of a sphere. Preferably such a piston body 1012 is generally rigid and the membrane 1011, because it is a relatively thin wall, is more flexible relative to the piston body 1012. To avoid overstretching or rupturing, the membrane 1011 may be supported by a plunger (not shown) used to displace the piston 1010 for extruding the substance(s) from a container. The plunger may therefore have a stepped configuration with a pin at its front-most end adapted for mating with the closed-end-hole 1013, and adjacent a thrust surface being extended with respect to the pin. Such a plunger may be configured so as the front surface of the pin is in contact with the membrane, e.g. in its contracted or extended state. Further, at the same time the thrust surface is in contact with the rear face of the piston.

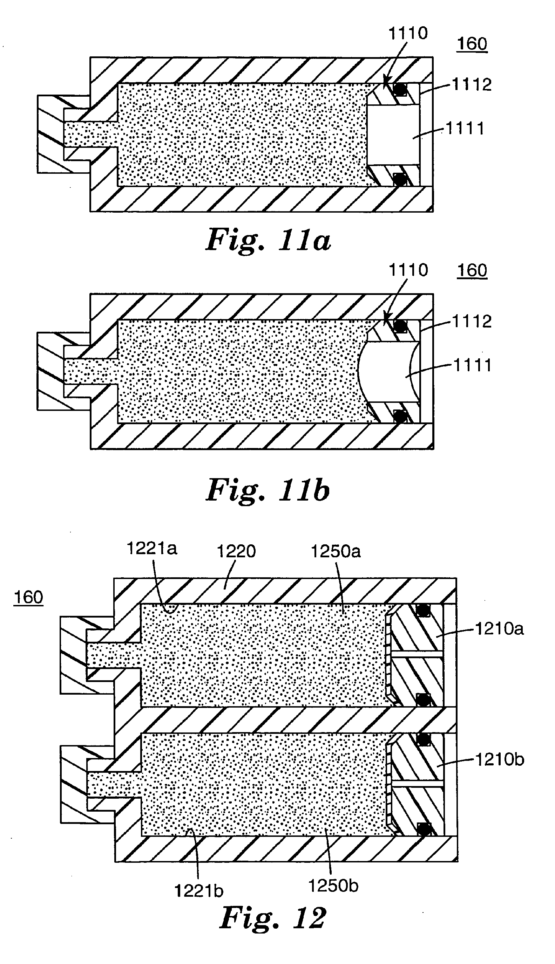

Fig. 11 shows an embodiment of a piston 1110 having an elastic member 1111 and a piston body 1112. The elastic member 1111 is tightly connected with the piston body 1112. Preferably such a piston 1110 is manufactured by two-component injection-molding. The piston body 1112 is generally rigid while the elastic member 1111, because it is made of a more elastic material, is more flexible relative to the piston body 1112. Such an embodiment is advantageous because a standard plunger (i.e. a plunger without a stepped configuration) supports the elastic member 1111 during extruding substance from a container, and thus limits deformation of the elastic member 1111 in a direction away from the substance.

Fig. 12 shows a container 1220 having two compartments 1221a and 1221b. The compartments 1221a, 1221b are filled with substances 1250a and 1250b, which, for example, may be the components of a two-component dental impression material. Two pistons 1210a and 1210b fit in the compartments 1221a, 1221b. Optionally the pistons may be connected to one another, for example the piston bodies may be formed (integrally) as one piece. As a further option, a dispensing tip may be adapted to the container for merging the two substances when extruded from the container. The dispensing tip may also comprise a static mixer to mix the substances.

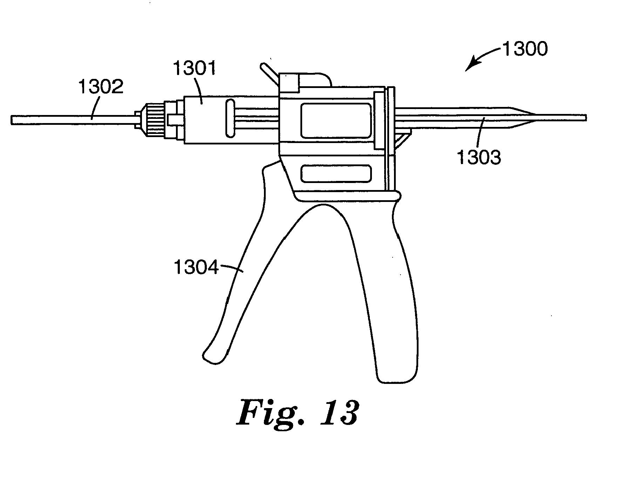

Fig 13 shows a dispensing gun 1300 (as commercially available under the designation "GarantTM Dispenser" from 3M ESPE AG, Seefeld, Germany) used for extruding a two-component material from a container 1301. A mixing tip 1302 is adapted to the container 1301. A plunger 1303 can be advanced by actuating the hand lever 1304 so as to displace the pistons (not shown) of the container 1301 and therefore to extrude the substances from the container 1301 via the mixing tip 1302.

The embodiments described are preferably made of thermoplastic or thermosetting materials. Preferably the piston body is made of injection-moldable materials like polyethylene, polypropylene, polystyrene, polycarbonate, polyoxymethylene, polyamide, acrylonitrile-butadiene-styrene, and other suitable materials. The membrane may be made of the same materials, in which case the areas requiring flexibility should be relatively thin, or they may be made of more elastic materials. Such elastic materials are for example thermoplastic elastomers like styrene-butadiene-styrene block copolymers (SEBS) or thermoplastic polyurethanes (TPU). Furthermore the membrane may be made of ethylene propylene rubber, ethylene propylene diene monomer (EPDM) rubber, silicones, and the like. It is further encompassed that elastic materials as that term is used above are used to form the piston body if appropriate. For example, the piston body could be made of an elastic material having a lower elasticity than the elastic material used for the membrane (or elastic part as shown in Fig. 11). It is also possible to use the same elastic material for both parts or even a more elastic material for the piston body, for example, because the piston body may become more rigid due to its shape, even if it is made of a more elastic material.

The present invention has now been described with reference to several embodiments thereof. It will be apparent to those skilled in the art that many changes can be made in the embodiments described without departing from the scope of the present invention. Thus the scope of the present invention should not be limited to the structures described in this application, but only by structures described by the language of the claims and the equivalents of those structures.

## Claims

1. Piston for extruding a substance from a container, comprising a pressure compensation surface to compensate for a difference between the pressure inside of the container and ambient pressure.

2. Piston according to claim 1, wherein the pressure compensation surface deforms to compensate for a volume change of the substance stored in the container.

3. Piston according to claim 1 or 2, wherein the pressure compensation surface deforms to compensate for a volume reduction of the substance stored in the container.

4. Piston according to any of the preceding claims, wherein the pressure compensation surface deforms to compensate at least partially for the pressure difference and thus prevents air from being drawn into the container and air coming between the piston and the substance.

5. Piston according to any of the preceding claims, wherein the pressure compensation surface is a surface of a membrane.

6. Piston according to claim 5, wherein the piston further comprises a piston body carrying the membrane.

7. Piston according to claim 6, wherein the membrane is arranged at a front end of the piston body.

8. Piston according to claim 6 or 7, wherein the membrane can be deformed relative to the piston body.

9. Piston according to any of the claims 6 to 8, wherein the piston body supports the membrane when the piston is used to extrude the substance from the container.

10. Piston according to any of the claims 6 to 9, wherein the piston body comprises a through-hole overlain by the membrane at one end.

11. Piston according to claim 10, wherein the through-hole provides fluid communication between a side of the membrane facing the piston body and the exterior of the piston.

12. Piston according to any of the claims 10 or 11, wherein the through-hole has its narrowest dimension adjacent the front end of the piston body.

13. Piston according claims 12, wherein the area of the narrowest dimension is between 0.01 mm² and 0.1 mm².

14. Piston according to any of the claims 10 to 13, wherein the piston body is deformable so that the through hole is closed upon compressing the piston body.

15. Piston according to any of the claims 10 to 14, wherein the through-hole is formed by a first passageway and a second passageway extending generally transversely between the first passageway and a side wall of the piston body.

16. Piston according to any of the claims 6 to 15, wherein the piston body further comprises a peripheral groove.

17. Piston according to claim 16, wherein the second passageway intersects a surface of the groove.

18. Piston according to claim 16, wherein the bottom of the peripheral groove comprises a secondary groove extending transverse to the peripheral groove.

19. Piston according to any of the claims 6 to 18, wherein the membrane covers at least a part of an end face of the piston body.

20. Piston according to claim 19, wherein the membrane covers the end face and at least a part of a side wall of the piston body.

21. Piston according to any of the claims 16 to 20, wherein the piston further comprises an o-ring retaining the membrane in the groove.

22. Piston according to any of the claims 5 to 21, wherein the membrane is a foil.

23. Piston according claim 22, wherein the foil comprises a metal layer.

24. Piston according to claims 22 or 23, wherein the foil is deep-drawn.

25. Piston according to claims 22, 23 or 24, wherein the foil is sealed to the piston by one of heat-sealing, welding, ultrasonic sealing or gluing.

26. Piston according to claim 5 wherein the piston comprises a closed-end-hole with at least a part of the end of the closed-end-hole represented by the membrane.

27. Piston according to any of the claims 1 to 4, wherein the pressure compensation surface is at least in part formed by an elastic member extending between the end faces of the piston.

28. Piston according to any of the preceding claims, wherein the piston comprises a sealing member adapted for sealing with a compartment wall of the container.

29. Piston according to claim 28, wherein the sealing member is molded in one step with the deformable pressure compensation surface.

30. Piston according to claims 28 or 29, wherein the sealing member is one of an annular lip-seal, a sealing bulge and a combination of the foregoing.

31. System, comprising
- a piston according to one of claims 1 to 30; and
- a container for storing a substance.

32. System according to claim 31, wherein the container comprises a compartment for storing the substance and an outlet connected with the compartment.

33. System according to any of the claims 31 to 32, further comprising the substance contained within the compartment.

34. System according to any of the claims 31 to 33, wherein the required pressure difference to deform the pressure compensation surface is less than the required pressure difference to displace the piston in the compartment.

35. System according to any of the claims 31 to 34, wherein the container comprises at least two compartments containing a flowable material component.

36. System according to claim 35, wherein the material components are components of a dental impression material.

37. System according to any of the claims 31 to 36, wherein at least two pistons are connected with one another.

38. Kit, comprising a system according to claim 31 and a mixing tip.

39. Kit according to claim 38, further comprising a dispensing gun for use with the system.
